# FASCICULE DE BREVET EUROPEEN

(11) **EP 3 840 250 B1**
(45) Date de publication et mention de la délivrance du brevet: **02.08.2023**
(21) Numéro de dépôt: 20214829.2
(22) Date de dépôt: 17.12.2020
(51) Int. Cl.: H04B 7/185, H04B 10/112

(54) **SYSTÈME SPATIAL DE TRANSMISSION DE DONNÉES PAR VOIE OPTIQUE EN ESPACE LIBRE FSO DANS LE DOMAINE DE LONGUEUR D'ONDE INFRAROUGE**
RÄUMLICHES SYSTEM ZUR OPTISCHEN DATENÜBERTRAGUNG IM FREIEN FSO-RAUM IM INFRAROT-WELLENLÄNGENBEREICH
SPATIAL SYSTEM FOR TRANSMITTING DATA BY OPTICAL MEANS IN FSO FREE SPACE IN THE INFRARED WAVELENGTH DOMAIN

(30) Priorité: 20.12.2019 FR 1915154
(43) Date de publication de la demande: 23.06.2021
(73) Titulaire: THALES, 92400 Courbevoie (FR)
(72) Inventeur: MAHO, Anaëlle, 31037 TOULOUSE Cedex 1 (FR); SOTOM, Michel, 31037 TOULOUSE Cedex 1 (FR); DELGA, Alexandre, 91116 Palaiseau Cedex (FR); FAUGERON, Mickaël, 31037 TOULOUSE Cedex 1 (FR)
(74) Mandataire: Atout PI Laplace

(56) Documents cités:
- EP-A1- 3 128 683
- WO-A1-2016/112286
- WO-A1-2018/103926
- WO-A2-00/14902
- US-A1- 2013 177 322
- HAMZA ABDELBASET S ET AL: "Classification Framework for Free Space Optical Communication Links and Systems", IEEE COMMUNICATIONS SURVEYS & TUTORIALS, vol. 21, no. 2, 1 avril 2019 (2019-04-01), pages 1346-1382, XP011727898, DOI: 10.1109/COMST.2018.2876805

## Description

La présente invention concerne un système spatial de transmission de données par voie optique en espace libre FSO (en anglais « Free Space Optical ») dans le domaine de longueur d'onde infrarouge, configuré pour transmettre :
- des données à haut débit de voie montante, émises par un premier terminal, terrestre ou aéronautique, situé dans un milieu atmosphérique, vers un deuxième terminal spatial, situé dans l'espace autour de la Terre, les données à haut débit de voie montante étant susceptibles d'être perturbées par les nuages et/ou des turbulences atmosphériques à une certaine altitude et/ou
- des données à haut débit de voies descendante, émises par le deuxième terminal spatial, situé dans l'espace, vers le premier terminal terrestre ou aéronautique, les données à haut débit de voie descendante étant susceptibles d'être perturbées par des nuages et/ou turbulences atmosphériques à une certaine altitude.

La présente invention concerne également une plateforme relai pour retransmettre les données montantes du premier terminal vers le deuxième terminal et/ou retransmettre les données descendantes du deuxième terminal vers le premier terminal, et diminuer l'affaiblissement des données à haut débit par des perturbations, créées par des nuages et des turbulences atmosphériques, interposées entre le premier terminal et le deuxième terminal.

De manière générale, la distance séparant un premier terminal et un deuxième terminal est importante, égale à au moins 200 kilomètres, et pouvant atteindre plusieurs centaines, voire plusieurs milliers ou dizaines de milliers de kilomètres. Cette distance définit la longueur minimale de la liaison optique.

Par définition, un premier terminal est un terminal de transmission par voie optique de données, « terrestre » ou « aéronautique ». Le premier terminal est dénommé « terrestre » dans le cas où il est situé au sol, et « aéronautique » dans le cas où il se trouve dans l'atmosphère pouvant être statique ou mobile.

Par définition, un deuxième terminal est un terminal de transmission spatial par voie optique de données à haut débit, situé à l'extérieur de l'atmosphère, et embarqué à bord d'un satellite évoluant sur une orbite comprise dans l'ensemble des orbites géostationnaires GSO (en anglais GeoStationary Orbit), des orbites moyennes MEO (en anglais Medium Earth Orbit) et des orbites basses LEO (en anglais Low Earth Orbit).

De manière préférée, l'invention vise des applications spatiales de transmission de données par voie optique en espace libre FSO (en anglais « Free Space Optical ») entre un premier terminal de transmission terrestre, i.e. situé au sol, et un deuxième terminal de transmission spatial, i.e. embarqué à bord d'un satellite.

De manière plus large, l'invention concerne également des applications spatiales de transmission de données par voie optique en espace libre entre un premier terminal de transmission aéronautique, i.e. situé dans l'atmosphère et évoluant au-dessus du sol, et un deuxième terminal de transmission spatial, i.e. embarqué à bord d'un satellite.

Les communications optiques à longue distance en espace libre sont communément définies avec des longueurs d'ondes, dans le proche infrarouge par des longueurs d'onde du domaine des longueurs d'ondes infrarouges à ondes courtes SWIR (en anglais « Short Wavelength Infrared ») comprises entre 1 µm et 3 µm, et dans le lointain infrarouge par des longueurs d'onde du domaine des longueurs d'onde infrarouges à ondes longues LWIR (en anglais « Long Wave Infrared ») comprises entre 8 µm et 12 µm et/ou des longueurs d'onde du domaine des longueurs d'ondes infrarouges à ondes moyennes MWIR (en anglais « Medium Wave Infrared ») comprises entre 3 µm et 5 µm.

De manière connue et indépendamment du domaine de longueurs d'ondes utilisé (LWIR ou SWIR), la propagation d'un signal optique, associé à une transmission de données à haut débit en espace libre FSO (en anglais Free Space Optics), est entravée par des perturbations atmosphériques du canal de transmission, les perturbations atmosphériques étant comprises dans l'ensemble formé par les turbulences et les aérosols.

Comme premier type de perturbation, les nuages denses, les brouillards sévères et aérosols divers entraînent par divers phénomènes de diffusion, notamment de Rayleigh et de Mie, des atténuations du signal d'autant plus importantes que les gouttes d'eau ou d'autres liquides, ont une taille comparable à celle des longueurs d'ondes optiques utilisées, et pouvant dépasser 30 dB par kilomètre.

Comme deuxième type de perturbation majeure subie par des liaisons optiques en espace libre FSO la scintillation, due aux fluctuations de l'indice de réfraction de l'atmosphère, se traduit au niveau du récepteur de transmission par des affaiblissements fluctuants du signal collecté, une perte d'alignement et d'efficacité de couplage au récepteur, et une perte d'efficacité de mélange das le cas d'un récepteur homodyne ou hétérodyne.

Ainsi, diffusion et scintillation dégradent fortement les performances de la transmission du signal et agissent directement sur le bilan de liaison.

Ces deux phénomènes de perturbations prépondérants atténuent et provoquent des évanouissements du signal, entraînent des déflections aléatoires de la direction de propagation ainsi qu'une « dispersion » du faisceau et dégradent globalement les performances de la transmission.

Lorsque la couverture nuageuse est trop importante, les performances minimales requises pour une transmission réussie ne sont plus atteignables et la liaison peut être bloquée.

A ce jour, seuls des systèmes civils spatiaux de communications optiques à longue distance en espace libre FSO utilisant des longueurs d'onde situées dans le domaine proche infrarouge SWIR, sont réalisés et exploités.

Comme décrit dans l'article de T. Planck et al., intitulé « Recent developments on the free space optical links and wavelength analysis », publié dans International Conférence on Space Optical Systems and Applications (ICSOS) Santa Monica, CA 2011, formant un premier document, et comme décrit dans l'article de E. Leitgeb et al., intitulé « Analysis and evaluation of optimum wavelengths for free-space optical transceivers », publié dans ICTON 2010, formant un deuxième document, il est connu que l'utilisation de longueurs d'onde situées dans le domaine des longueurs d'onde infrarouges à ondes longues LWIR, y compris pour des applications spatiales, permet de diminuer les effets des diffusions de Mie et de Rayleigh ainsi que les effets de scintillation subis par un signal de communication optique à longue distance en espace libre FSO.

Afin de surmonter le problème d'indisponibilité, créé par des perturbations atmosphériques sur une liaison de transmission en espace libre FSO entre un premier et un deuxième terminal, plusieurs solutions sont connues.

Une première solution consiste à mettre en oeuvre une diversité géographique par le déploiement d'au moins deux premiers terminaux optiques de transmission en divers lieux géographiques, suffisamment éloignés les uns des autres pour assurer la disponibilité de la liaison optique FSO vis-à-vis d'au moins un terminal. Cette solution est coûteuse et onéreuse pour le système de transmission en raison de la duplication des premiers terminaux. Par ailleurs, en plus de répondre à des critères météorologiques exigeants, les premiers terminaux doivent être situés près des coeurs de réseaux et dans des zones géographiques autorisées.

Une deuxième solution connue pour palier à l'indisponibilité de la liaison optique FSO est de remplacer la liaison optique FSO par des liaisons radiofréquences RF à hautes fréquences. Néanmoins l'augmentation souhaitée des débits des données à transmettre oblige à considérer des bandes de fréquences toujours plus élevées pour ces liaisons qui sont aussi sensibles aux perturbations atmosphériques. En plus d'être lourdes, volumineuses et de consommer plus, ces technologies RF ont aussi pour inconvénient d'être réglementées par des standards et des licences, contraignants et coûteux. Enfin l'utilisation de solutions hybrides FSO/RF ne permet pas de capitaliser sur les avantages des solutions FSO en termes de capacité de transmission, de masse, consommation puisqu'elle oblige à embarquer les deux types de terminaux sur satellite.

Il est à remarquer que pour atténuer les effets des évanouissements dus aux turbulences atmosphériques, une troisième solution, est le recours à des techniques numériques telles que l'entrelacement et les codes correcteurs d'erreurs. En séparant et/ou répétant les paquets, elles permettent de limiter les erreurs dues aux pertes lors de fortes atténuations. Néanmoins ces techniques numériques ne corrigent que de petites perturbations et de courts évanouissements, et ne corrigent pas des atténuations fortes et/ou prolongées.

Il est à remarquer également que d'autres solutions connues permettent de corriger les effets de la scintillation, la déflexion et de l'élargissement du faisceau optique, notamment des systèmes d'optique adaptative et des systèmes optiques multi-ouvertures. Toutefois, ces méthodes sont complexes à mettre en oeuvre, ne corrigent pas les fortes atténuations atmosphériques, et restent limitées à certains cas d'application.

Le problème technique est d'améliorer les performances de transmission en termes de débit et de disponibilité d'un système spatial de transmission de données entre un premier terminal terrestre ou aéronautique et un deuxième terminal spatial, distants entre eux d'au moins deux cents voir jusqu'à plusieurs milliers de kilomètres, et de réduire l'affaiblissement du signal optique par des perturbations du canal de transmission, défini entre le premier terminal et le deuxième terminal, ces perturbations étant causées par des turbulences atmosphériques, sans accroitre la complexité des premier et deuxième terminaux.

A cet effet l'invention a pour objet un système spatial de transmission de données par voie optique en espace libre FSO comprenant : un premier terminal de transmission de données par voie optique en espace libre FSO, terrestre ou aéronautique ; un deuxième terminal de transmission de données par voie optique en espace libre FSO, embarqué dans un satellite ; une plateforme relai, située entre le premier terminal de transmission et le deuxième terminal de transmission, et configurée pour servir de relai régénérateur de transmission de données :
- entre une première liaison de transmission, montante depuis le premier terminal jusqu'à la plateforme relai, et une deuxième liaison de transmission, montante de transmission de données, depuis la plateforme relai jusqu'au deuxième terminal de transmission, et/ou
- entre une troisième liaison de transmission, descendante depuis le deuxième terminal jusqu'à la plateforme relai, et une quatrième liaison de transmission, descendante depuis la plateforme relai jusqu'au premier terminal.

Le système spatial de transmission de données par voie optique en espace libre FSO est caractérisé en ce que la plateforme relai est configuré pour évoluer à une altitude supérieure à celles nuages et des turbulences atmosphériques, et la plateforme relai est configurée pour :
- recevoir les données émises par le premier terminal, portées par un premier signal optique de la première liaison montante qui utilise une première longueur d'onde dans le domaine MWIR/LWIR des longueurs d'onde infrarouges à ondes longues LWIR, comprises entre 8 et 12 µm et/ou des longueurs d'onde à ondes moyennes MWIR, comprises entre 3 et 5 µm, et émettre les données reçues sur un deuxième signal optique porteur de la deuxième liaison montante qui utilise une deuxième longueur d'onde dans le domaine des longueurs d'ondes infrarouges à ondes courtes SWIR ; et/ou
- recevoir les données émises par le deuxième terminal, portées par un troisième signal optique de la troisième liaison descendante qui utilise une troisième longueur d'onde dans le domaine des longueurs d'onde infrarouges à ondes courtes SWIR, et émettre les données reçues sur un quatrième signal optique porteur de la quatrième liaison descendante qui utilise une quatrième longueur d'onde dans le domaine MWIR/LWIR des longueurs d'onde infrarouges à ondes longues LWIR et/ou des longueurs d'ondes à ondes moyennes MWIR.

Selon des modes particuliers de réalisation, le système spatial de transmission de données par voie optique en espace libre FSO comprend l'une ou plusieurs des caractéristiques suivantes, prises isolément ou en combinaison :
.- l'altitude de la plateforme relai est au niveau de la stratosphère ou au-delà ; et/ou la plateforme relai est un ballon dirigeable ou un drone évoluant dans la stratosphère ou un satellite évoluant sur une orbite basse LEO ;
- le premier terminal, terrestre ou aéronautique, est compris dans l'ensemble formé par les stations sol, les navires, et les aéronefs tels que les drones, les avions et les hélicoptères ;
- le deuxième terminal, spatial, est embarqué à bord d'un satellite évoluant sur une orbite géostationnaire GEO ou une orbite à altitude moyenne MEO ou une orbite à basse altitude LEO ;
- la plateforme relai comprend une première chaîne de conversion montante ayant une chaine de réception montante), configurée pour recevoir dans le domaine MWIR/LWIR le premier signal optique de la première liaison montante, optionnellement amplifier et/ou optionnellement dé-multiplexer en longueur d'onde le premier signal optique reçu, détecter et démoduler le signal amplifié et dé-multiplexé en données démodulées ; une chaine d'émission montante, configurée pour émettre, optionnellement amplifier, et/ou optionnellement multiplexer dans le domaine SWIR le deuxième signal optique de la deuxième liaison montante, modulé par les données démodulées de la première liaison montante, codées avec ou sans entrelacement ou non codées ;
- la chaine de réception montante comporte un premier télescope en réception de la première liaison montante, une chaine démodulation montante à détection cohérente par battement hétérodyne ou homodyne comprenant un oscillateur local et un hybride 90° suivi d'un ensemble d'au moins un photo-détecteur compris dans l'ensemble des photo-détecteurs à puits quantiques QWIPs, des photo-détecteurs à puits quantiques QCDs, et des photodétecteurs utilisant un matériaux compris dans l'ensemble des matériaux MCT, HgCdTe (Tellure de mercure-cadmium) et T2SL (InAs/Ga type-II superlattice) ;
- la chaine de réception montante comporte en outre un préamplificateur optique semi-conducteur SOA à faible bruit, et/ou un démultiplexeur en longueur d'onde dans le domaine MWIR/LWIR, basé sur des technologies à semi-conducteurs Silicium, Germanium, Phosphure d'Indium (InP) ou Chalcogénure ou sur des éléments optiques discrets comme des réseaux de diffraction ou filtres interférentiels, placé avant ou après le préamplificateur, et/ou dans lequel l'ensemble d'au moins un photo-détecteur est une paire de photo-détecteurs équilibrés ;
- la chaine d'émission montante comporte un émetteur optique dans le domaine de longueurs d'onde SWIR à modulation externe ou à modulation directe, un amplificateur optique de puissance à fibre dopée en Erbium EDFA, et optionnellement un multiplexeur en longueur d'onde, placé avant ou après l'amplificateur de puissance, et un deuxième télescope en émission de la deuxième liaison montante ;
- la première chaîne de conversion montante comporte un premier module électronique de traitement des données démodulées de la première liaison montante connecté entre la chaine de réception montante et la chaine d'émission montante, optionnellement pour décoder, corriger des erreurs sur bit et ré-encoder ces données ;
- la plateforme relai comprend une deuxième chaîne de conversion descendante ayant : une chaine de réception descendante, configurée pour recevoir dans le domaine SWIR le troisième signal optique de la troisième liaison descendante, optionnellement amplifier et/ou optionnellement dé-multiplexer en longueur d'onde le premier signal optique reçu, détecter et démoduler le signal amplifié et dé-multiplexé en données démodulées ; une chaine d'émission descendante, configurée pour émettre, amplifier et optionnellement multiplexer dans le domaine MWIR/LWIR le quatrième signal optique de la quatrième liaison descendante, modulé par les données démodulées de la troisième liaison descendante, codées avec ou sans entrelacement ou non codées ;
- la chaine de réception descendante dans le domaine SWIR comporte un troisième télescope en réception de la troisième liaison descendante, un préamplificateur optique à faible bruit, notamment un amplificateur à fibre dopée en Erbium EDFA, optionnellement un démultiplexeur en longueur d'onde dans le domaine SWIR, une chaîne de détection et de démodulation descendante comprise dans l'ensemble formé par un photorécepteur à détection directe, un démodulateur optique et un photorécepteur mis en série, et un récepteur cohérent comprenant un oscillateur local et un hybride 90° suivi d'une paire de photorécepteurs équilibrés ;
- la chaine d'émission descendante comporte un émetteur optique dans le domaine de longueurs d'onde MWIR/LWIR à modulation directe ou externe, un ou plusieurs amplificateurs optiques semi-conducteurs SOA de puissance, optionnellement un multiplexeur en longueur d'onde, basé sur des technologies à semi-conducteurs Silicium, Germanium, Phosphure d'Indium (InP) ou ou Chalcogénure ou sur des éléments optiques discrets comme des réseaux de diffraction ou des filtres interférentiels, et un quatrième télescope en émission de la quatrième liaison descendante ;
- l'émetteur optique de la chaine d'émission descendante est à modulation externe, fonctionne dans le domaine des longueurs d'onde MWIR/LWIR et comporte un laser QCL à modulation externe, modulé par un modulateur de phase ou d'amplitude ou d'amplitude et de phase, compris dans l'ensemble formé par les modulateurs à électro-absorption EAM et les modulateurs Mach Zehnder MZM ;
- l'émetteur optique de la chaine d'émission descendante comporte un laser QCL à modulation externe, modulé par un modulateurde phase ou d'amplitude ou d'amplitude et de phase compris dans l'ensemble formé par les modulateurs à électro-absorption EAM et les modulateurs Mach-Zehnder MZM, de préférence un modulateur MZM ;
- la deuxième chaîne de conversion descendante comporte un deuxième module électronique de traitement des données démodulées de la troisième liaison descendante, connecté entre la chaine de réception descendante et la chaine d'émission descendante, optionnellement pour décoder, corriger des erreurs sur bit et ré-encoder ces données ;
- le premier terminal comprend un émetteur et un récepteur supplémentaires, configurés pour recevoir du ou émettre au deuxième terminal des données en voie optique directe par espace libre sans utiliser la plateforme relai, et la plateforme relai est configurée pour activer les première et deuxième liaisons montantes et/ou les troisième et quatrième liaisons descendantes lorsque la transmission de données par voie directe entre le premier terminal et le deuxième terminal est interrompu durablement par des sources de perturbations atmosphériques.

L'invention a également pour objet une plateforme relai pour retransmettre des données par voie optique en espace libre FSO entre un premier terminal de transmission optique, terrestre ou aéronautique, et un deuxième terminal de transmission optique, embarqué dans un satellite, la plateforme relai étant configurée pour servir de relai régénérateur de transmission de données :
- entre une première liaison de transmission, montante depuis le premier terminal jusqu'à la plateforme relai, et une deuxième liaison de transmission, montante de transmission de données, depuis la plateforme relai jusqu'au deuxième terminal de transmission, et/ou
- entre une troisième liaison de transmission, descendante depuis le deuxième terminal jusqu'à la plateforme relai, et une quatrième liaison de transmission, descendante depuis la plateforme relai jusqu'au premier terminal ; et la plateforme relai étant apte à évoluer à une altitude supérieure à celles des turbulences atmosphériques.

La plateforme relai est caractérisée en ce qu'elle est configurée pour :
- recevoir les données émises par le premier terminal, portées par un premier signal optique de la première liaison montante qui utilise une première longueur d'onde dans le domaine MWIR/LWIR des longueurs d'onde infrarouges à ondes longues LWIR, comprises entre 8 et 12 µm et/ou des longueurs d'onde à ondes moyenne MWIR, comprises entre 3 et 5 µm, et émettre les données reçues sur un deuxième signal optique porteur de la deuxième liaison montante qui utilise une deuxième longueur d'onde dans le domaine des longueurs d'ondes infrarouges à ondes courtes SWIR ; et/ou
- recevoir les données émises par le deuxième terminal, portées par un troisième signal optique de la troisième liaison descendante qui utilise une troisième longueur d'onde dans le domaine des longueurs d'onde infrarouges à ondes courtes SWIR, et émettre les données reçues sur un quatrième signal optique porteur de la quatrième liaison descendante qui utilise une quatrième longueur d'onde dans le domaine MWIR/LWIR des longueurs d'onde infrarouges à ondes longues LWIR et/ou des longueurs d'onde à ondes moyenne MWIR.

Selon des modes particuliers de réalisation, la plateforme relai comprend l'une ou plusieurs des caractéristiques suivantes, prises isolément ou en combinaison :
- la plateforme relai est configurée pour évoluer à une altitude située au niveau de la stratosphère ou au-delà ; et/ou
- la plateforme relai est comprise dans l'ensemble formé par les ballons dirigeables stratosphériques, les drones à moyenne ou haute altitude et les satellites évoluant sur orbite basse LEO ; et/ou
- la plateforme relai comprend une première chaîne de conversion montante ayant
   * une chaine de réception montante, configurée pour recevoir dans le domaine MWIR/LWIR le premier signal optique de la première liaison montante, optionnellement amplifier et/ou optionnellement dé-multiplexer en longueur d'onde le premier signal optique reçu, détecter et démoduler le signal optionnellement amplifié et/ou optionnellement dé-multiplexé en données démodulées ; et
   * une chaine d'émission montante, configurée pour émettre, amplifier et optionnellement multiplexer dans le domaine SWIR le deuxième signal optique de la deuxième liaison montante, modulé par les données démodulées de la première liaison montante, codées avec ou sans entrelacement ou non codées ; et/ou
- la plateforme comprend une deuxième chaîne de conversion descendante ayant
   * une chaine de réception descendante, configurée pour recevoir dans le domaine SWIR le troisième signal optique de la troisième liaison descendante, optionnellement amplifier et/ou optionnellement dé-multiplexer en longueur d'onde le premier signal optique reçu, détecter et démoduler le signal optionnellement amplifié et/ou optionnellement dé-multiplexé en données démodulées ; et
   * une chaine d'émission descendante, configurée pour émettre, amplifier et optionnellement multiplexer dans le domaine MWIR/LWIR le quatrième signal optique de la quatrième liaison descendante, modulé par les données démodulées de la troisième liaison descendante, codées avec ou sans entrelacement ou non codées.

Le document "Classification Framework for Free Space Optical Communication Links and Systems" (HAMZA ABDELBASET S ET AL., IEEE COMMUNICATIONS SURVEYS & TUTORIALS, vol. 21, no. 2, 1 avril 2019) divulgue un système spatial de transmission de données par voie optique en espace libre.

L'invention sera mieux comprise à la lecture de la description de plusieurs formes de réalisation qui va suivre, donnée uniquement à titre d'exemple et faite en se référant aux dessins sur lesquels :
La figure 1 est une vue de l'architecture d'une première forme de réalisation d'un système spatial de transmission de données par voie optique en espace libre FSO selon l'invention ;
La figure 2 est une vue de l'architecture d'une deuxième forme de réalisation, plus complexe que la première forme de réalisation, d'un système spatial de transmission de données par voie optique en espace libre FSO selon l'invention ;
La figure 3 est une vue d'un exemple d'architecture d'une première chaine de conversion montante d'une plateforme relai selon l'invention d'un système spatial de transmission de données par voie optique en espace libre FSO comme ceux décrits dans les figures 1 et 2 ;
La figure 4 est une vue d'un exemple d'architecture d'une deuxième chaine de conversion descendante de la plateforme relai d'un système spatial de transmission de données par voie optique en espace libre FSO comme ceux décrits dans les figures 1 et 2.

L'invention repose sur une plateforme relai pour des liaisons entre un satellite, situé dans un milieu non perturbé, et une station optique, terrestre située dans un milieu perturbé par des nuages, brouillard et/ou des turbulences atmosphériques, la plateforme relai formant une interface de conversion optique de signaux reçus dans le proche infrarouge, typiquement dans une longueur d'onde égale à 1,55 µm, vers le lointain infrarouge, typiquement dans une longueur d'onde égale à 10 µm.

Les longueurs d'onde dans le domaine du lointain infrarouge LWIR sont moins sensibles aux perturbations atmosphériques, en particulier aux diffusions de Rayleigh et de Mie ainsi qu'à la scintillation, leur utilisation réduit, à moindre coût, la fréquence et la durée des interruptions d'une liaison de transmission perturbée par des nuages et des turbulences atmosphériques.

Cette solution de plateforme met à profit dans sa mise en oeuvre les bénéfices apportés par des matériaux semi-conducteurs et en particulier la possibilité d'intégration des composants photoniques (laser, modulateur...) qui permettent de gagner en masse et en volume.

En outre, la sécurité oculaire est améliorée par l'utilisation d'une longueur d'onde plus élevée.

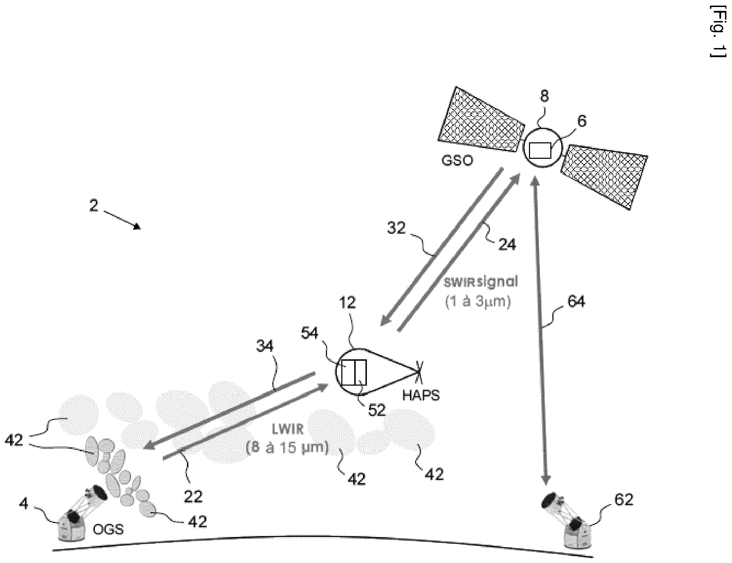

Suivant la figure 1 et selon l'invention, un système spatial de transmission de données par voie optique en espace libre FSO 2 comprend un premier terminal 4 de transmission de données par voie optique en espace libre FSO, terrestre ou aéronautique, et un deuxième terminal 6 de transmission de données par voie optique en espace libre FSO, embarqué dans un satellite 8.

Le système spatial de transmission 2 selon l'invention comporte également une plateforme relai 12, située entre le premier terminal de transmission 4 et le deuxième terminal de transmission 6.

La plateforme relai 12 est configurée pour servir de relai régénérateur de transmission de données entre une première liaison de transmission 22, montante, depuis le premier terminal 2 jusqu'à la plateforme relai 12, et une deuxième liaison de transmission 24, montante depuis la plateforme relai 12 jusqu'au deuxième terminal de transmission 6.

La plateforme relai 12 est configurée également pour servir de relai régénérateur de transmission de données entre une troisième liaison de transmission 32, descendante depuis le deuxième terminal 6 jusqu'à la plateforme relai 12, et une quatrième liaison de transmission 34, descendante depuis la plateforme relai 12 jusqu'au premier terminal 4.

La plateforme relai 12 est configurée pour évoluer à une altitude supérieure à celles nuages et/ou des turbulences atmosphériques 42.

La plateforme relai 12 est configurée pour recevoir les données émises par le premier terminal 4, portées par un premier signal optique de la première liaison montante 22 qui utilise une première longueur d'onde dans le domaine des longueurs d'onde infrarouges à ondes longues LWIR, et émettre les données reçues sur un deuxième signal optique porteur de la deuxième liaison montante 24 qui utilise une deuxième longueur d'onde dans le domaine des longueurs d'onde infrarouges à ondes courtes SWIR.

La plateforme relai 12 est configurée pour recevoir les données émises par le deuxième terminal 6, portées par un troisième signal optique de la troisième liaison descendante 32 qui utilise une troisième longueur d'onde dans le domaine des longueurs d'ondes infrarouges à ondes courtes SWIR, et émettre les données reçues sur un quatrième signal optique porteur de la quatrième liaison descendante 34 qui utilise une quatrième longueur d'onde dans le domaine des longueurs d'ondes infrarouges à ondes longues LWIR.

La plateforme relai 12 comporte ici une première chaine de conversion montante 52 et une deuxième chaine de conversion descendante 54.

Suivant la figure 1 et de manière particulière, le premier terminal 4 est une station terrestre optique OGS (en anglais « Optical Ground Station »), la plateforme relai 12 est un ballon dirigeable stratosphérique HAPS (en anglais « High Altitude Platform Systems/stations »), le satellite 8 embarquant le deuxième terminal 6 est un satellite géostationnaire GSO.

De manière générale, l'altitude de la plateforme relai est au niveau de la stratosphère ou au-delà, et la plateforme relai est un ballon dirigeable ou un drone évoluant dans la stratosphère ou un satellite évoluant sur une orbite basse LEO.

De manière générale, le premier terminal, terrestre ou aéronautique, est compris dans l'ensemble formé par les stations sol, les navires, et les aéronefs tels que les drones, les avions et les hélicoptères.

De manière générale, le deuxième terminal spatial est embarqué à bord d'un satellite évoluant sur une orbite géostationnaire GSO ou une orbite à altitude moyenne MEO ou une orbite à basse altitude LEO.

De manière avantageuse, la plateforme relai 12 du système spatial de transmission 2 permet d'augmenter la disponibilité et la capacité d'une transmission des liaisons montante et/ou descendante entre le premier terminal et le deuxième terminal. Sa mise en oeuvre est simple et peu onéreuse.

De manière plus générale, le premier signal optique de la première liaison montante peut utiliser une première longueur d'onde dans le domaine MWIR/LWIR des longueurs d'onde infrarouges à ondes longues LWIR, comprises entre 8 et 12 µm et/ou des longueurs d'onde à ondes moyennes MWIR, comprises entre 3 et 5 µm.

De manière plus générale, le quatrième signal optique la quatrième liaison descendante 34 peut utiliser une première longueur d'onde dans le domaine MWIR/LWIR des longueurs d'onde infrarouges à ondes longues LWIR, comprises entre 8 et 12 µm et des longueurs d'onde à ondes moyennes MWIR, comprises entre 3 et 5 µm.

Avantageusement, la partie du système spatial de transmission, située en dehors du milieu perturbé, est transparente.

De plus, les composants technologiques étant fabriqués en matériaux semi-conducteurs, des solutions photoniques intégrées, donc plus légères et plus compactes, permettent de réaliser les chaînes de conversion montante et descendante de la plateforme relai.

Il est à remarquer également que les longueurs d'ondes dans le lointain infrarouge LWIR et dans le domaine moyen infrarouge MWIR sont aussi moins dangereuses d'un point de vu oculaire.

En supplément, le premier terminal 2 comprend un émetteur et un récepteur supplémentaires, non représentées sur la figure 1, et configurés pour recevoir du ou émettre au deuxième terminal des données en voie optique directe par espace libre dans le domaine de longueur d'onde du proche infrarouge sans utiliser la plateforme relai 12.

La plateforme relai 12 est configurée pour activer les première et deuxième liaisons montantes et/ou les troisième et quatrième liaisons descendantes lorsque la transmission de données par voie directe entre le premier terminal et le deuxième terminal est interrompu durablement par des sources de perturbations atmosphériques.

A titre d'exemple, un deuxième premier terminal optique 62 est illustré sur la figure 1 en communication directe avec le deuxième terminal 6 du satellite 8 sur une liaison bidirectionnelle 64 fonctionnant dans le domaine de longueur d'onde infrarouge à ondes courtes SWIR.

En temps clair, la transmission est directe avec une capacité maximale. En cas de perturbations, la transmission se poursuit dans le domaine infrarouge lointain LWIR, typiquement à 10µm, via la plateforme relai 12, avec une capacité de transmission, éventuellement réduite.

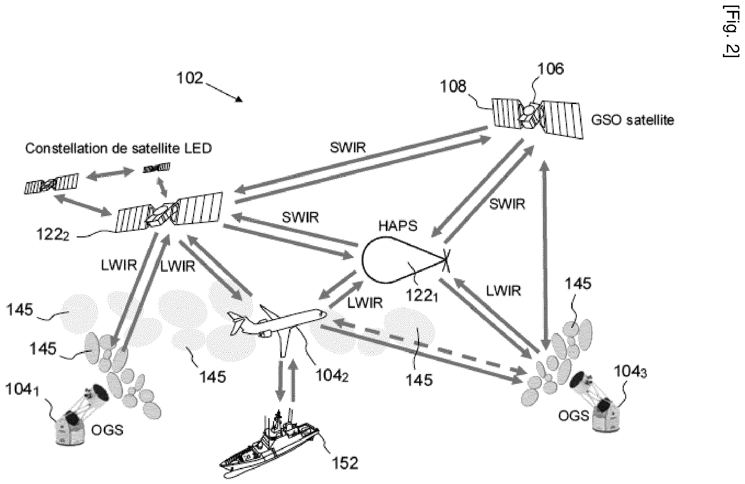

Selon la figure 2 et une deuxième forme de réalisation, un système spatial de transmission de données par voie optique en espace libre FSO 102 comprend :
- un ensemble de premiers terminaux de transmission de données par voie optique en espace libre FSO 104₁, 104₂, 104₃, formés respectivement par une première station optique terrestre OGS située à gauche sur la figure 2, un avion, et une deuxième station optique terrestre située à droite sur la figure 2 ; et
- un deuxième terminal 106 de transmission de données par voie optique en espace libre FSO, embarqué ici dans un satellite géostationnaire GSO 108.

Le système spatial de transmission 102 selon l'invention comporte également un ensemble de deux plateformes relai 122₁, 122₂, formées respectivement par une plateforme à haute altitude HAPS et un satellite LEO sur une orbite basse.

La première plateforme relai 122₁ sert de relai régénérateur entre le la deuxième station optique terrestre 104₃ et le deuxième terminal 106 embarqué à bord du satellite GSO 108, et utilise en réception montante et en émission descendante des porteuses dans le domaine infrarouge lointain LWIR dans le cas où les première liaison montante et quatrième liaison descendante correspondantes sont dégradées ou interrompues en raison de blocage par des nuages ou des turbulences 145.

La première plateforme relai 122₁ sert également de relai régénérateur entre le terminal optique 104₂, embarqué à bord de l'avion, et le deuxième terminal 106 embarqué à bord du satellite GSO 108, et utilise en réception montante et en émission descendante des porteuses dans le domaine infrarouge lointain LWIR dans le cas où les première liaison montante et quatrième liaison descendante correspondantes sont dégradées ou interrompues en raison de blocage par des nuages ou des turbulences 145.

La deuxième plateforme relai 122₂ sert de relai régénérateur entre le la première station optique terrestre 104₁ et le deuxième terminal 106 embarqué à bord du satellite GSO 108, et utilise en réception montante et en émission descendante des porteuses dans le domaine infrarouge lointain LWIR dans le cas où les première liaison montante et quatrième liaison descendante correspondantes sont dégradées ou interrompues en raison de blocage par des nuages ou des turbulences 145.

La deuxième plateforme relai 122₂ sert également de relai régénérateur entre le terminal optique 104₂, embarqué à bord de l'avion, et le deuxième terminal 106 embarqué à bord du satellite GSO 108, et utilise en réception montante et en émission descendante des porteuses dans le domaine infrarouge lointain LWIR dans le cas où les première liaison montante et quatrième liaison descendante correspondantes sont dégradées ou interrompues en raison de blocage par des nuages ou des turbulences 145.

Il est à remarquer que l'avion à bord duquel est embarqué le premier terminal 104₂ sert ici de relai à un terminal maritime de transmission 152 et à la deuxième station optique terrestre GSO, mais ce relai n'est pas une plateforme relai au sens de l'invention car il n'évolue pas au dessus de l'atmosphère et des perturbations éventuelles de celle-ci.

Il est à remarquer que l'utilisation du domaine LWIR décrite dans la figure 2 est une utilisation préférée mais cette utilisation peut être étendue de manière plus générale au domaine MWIR/LWIR.

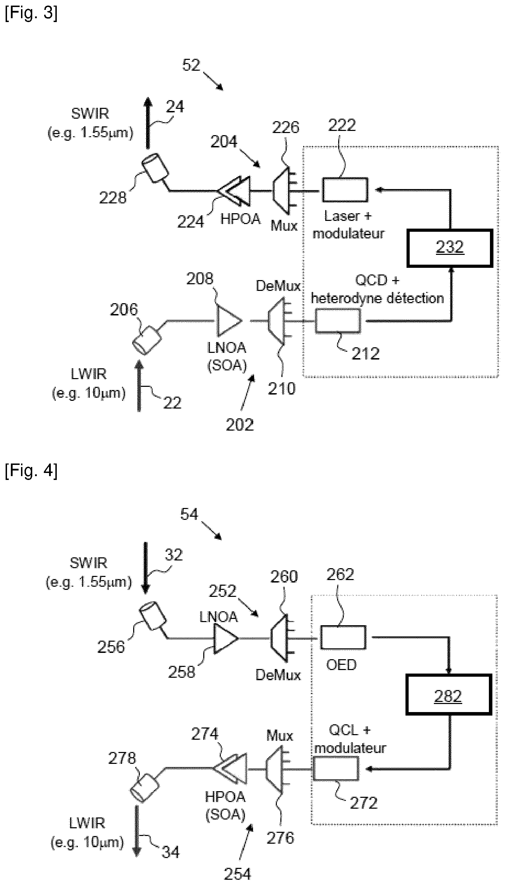

Suivant la figure 3, la première chaîne de conversion montante 52 comporte une chaîne de réception montante 202 et une chaîne d'émission montante 204.

La chaîne de réception montante 202 est configurée pour recevoir dans le domaine LWIR le premier signal optique de la première liaison montante 22, amplifier et dé-multiplexer en longueur d'onde le premier signal optique reçu, détecter et démoduler le signal amplifié et dé-multiplexé en données démodulées.

La chaine d'émission montante 204 est configurée pour émettre, amplifier et multiplexer dans le domaine SWIR le deuxième signal optique de la deuxième liaison montante 24, modulé par les données démodulées de la première liaison montante, codées avec ou sans entrelacement ou non codées.

La chaine de réception montante 202 comporte un premier télescope 206 en réception de la première liaison montante 22, un préamplificateur optique semi-conducteur SOA 208 (en anglais « Semiconductor Optical Amplifier ») à faible bruit LNOA (en anglais « Low Noise Optical Amplifier »), un démultiplexeur 210 en longueur d'onde dans le domaine LWIR, et une chaine démodulation montante 212 à détection cohérente par battement hétérodyne ou homodyne.

Le démultiplexeur 210 en longueur d'onde dans le domaine LWIR est basé sur des technologies à semi-conducteurs Silicium, Germanium, Posphure d'Indium (InP) ou Chalcogénure ou sur des éléments optiques discrets comme des réseaux de diffraction ou des filtres interférentiels, et placé avant ou après le préamplificateur.

La chaine démodulation montante à détection cohérente par battement hétérodyne ou homodyne comprend un oscillateur local et un hybride 90° suivi d'une paire de photo-détecteurs équilibrés basés sur des photo-détecteurs compris dans l'ensemble des photo-détecteurs à puits quantiques QWIPs (en anglais « Quantum Well Infrared Photondetectors »), des photo-détecterus à puits quantiques QCDs (en anglais « Quantum Cascade Detectors »), des photodétecteurs utilisant un des matriaux compris dans l'ensemble des matériaux MCT, HgCdTe (Tellure de mercure-cadmium) et T2SL (InAs/GaS type-II superlattice).

La chaine d'émission montante 204 comporte un émetteur optique 222 dans le domaine de longueurs d'onde SWIR à modulation externe, un amplificateur optique de puissance 224 HPOA (en anglais « High Power Optical Amplifier ») à fibre dopée en Erbium EDFA (en anglais « Erbium Doped Fiber Amplifier »), un multiplexeur 226 en longueur d'onde, placé avant ou après l'amplificateur de puissance 224, et un deuxième télescope 228 en émission de la deuxième liaison montante 24.

En outre, la première chaîne de conversion montante 52 comporte un premier module électronique 232 de traitement des données démodulées de la première liaison montante connecté entre la chaine de réception montante 202 et la chaine d'émission montante 204.

En variante, le préamplificateur optique SOA à faible bruit 208 et/ou le démultiplexeur en longueur d'onde 210 peuvent être omis.

De manière plus générale, la paire de photo-détecteurs équilibrés à puits quantiques, QWIPs ou QCDs, ou utilisant un des matriaux compris dans l'ensemble des matériaux MCT, HgCdTe (Tellure de mercure-cadmium) et T2SL (InAs/GaS type-II superlattice, peut être remplacée par un ensemble d'un ou plus de deux photo-détecteurs à puits quantiques QWIP ou QCD, ou utilisant un des matriaux compris dans l'ensemble des matériaux MCT, HgCdTe (Tellure de mercure-cadmium) et T2SL (InAs/GaS type-II superlattice.

De manière plus générale, la chaine de réception montante 202 et ses composants sont configurés pour fonctionner dans le domaine MWIR/LWIR de longueurs d'onde.

Suivant la figure 3, la conversion est effectuée en deux temps avec d'abord la réception du signal optique dans une longueur d'onde du domaine infrarouge LWIR et sa conversion en signal électronique par le photorécepteur 212. Le signal électronique subit éventuellement du traitement du signal puis, dans un second temps est reconverti en signal optique dans une autre longueur d'onde grâce à un laser à modulation externe.

L'invention permet de contourner les limites physiques des longueurs d'onde en proche infrarouge tout en s'intégrant aux systèmes actuellement envisagés. Elle est aussi compatible et complémentaire avec les solutions existantes. Elle a un impact modéré sur le coût, la consommation et le volume du système global.

De manière préférentielle, le relai pourrait se faire entre une station sol et satellite GEO via un HAPS.

Suivant la figure 4, la deuxième chaîne de conversion descendante 54 comporte une chaîne de réception descendante 252 et une chaîne d'émission descendante 254.

La chaîne de réception descendante 252 est configurée pour recevoir dans le domaine de longueur d'onde SWIR le troisième signal optique de la troisième liaison descendante 32, amplifier et dé-multiplexer en longueur d'onde le premier signal optique reçu, détecter et démoduler le signal amplifié et dé-multiplexé en données démodulées.

La chaîne d'émission descendante 252 est configurée pour émettre, amplifier et multiplexer dans le domaine LWIR le quatrième signal optique de la quatrième liaison descendante 34, modulé par les données démodulées de la troisième liaison descendante 32, codées avec ou sans entrelacement ou non codées.

La chaine de réception descendante 252 comporte un troisième télescope 256 en réception de la troisième liaison descendante 32, un préamplificateur optique à faible bruit 258 LNOA (en anglais « Low Noise Optical Amplifier »), notamment un amplificateur à fibre dopée en Erbium EDFA (en anglais « Erbium Doped Fiber Amplifier »), un démultiplexeur en longueur d'onde 260 dans le domaine SWIR, et une chaine de détection et de démodulation montante 262.

La chaîne de détection et de démodulation descendante 262 est comprise dans l'ensemble formé par un photorécepteur à détection directe, un démodulateur optique et un photorécepteur mis en série, et un récepteur cohérent comprenant un oscillateur local et un hybride 90° suivi d'une paire de photorécepteurs équilibrés.

La chaine d'émission descendante 254 comporte un émetteur optique 272 dans le domaine de longueurs d'onde LWIR à base d'un laser QCL intégré monolithiquement avec un Modulateur Mach-Zehnder MZM, un ou plusieurs amplificateurs optiques semi-conducteurs 274 SOA de puissance HPOA, un multiplexeur en longueur d'onde 276, et un quatrième télescope en émission 278 de la quatrième liaison descendante 34.

Le multiplexeur en longueur d'onde 276 est basé sur des technologies à semi-conducteurs Silicium, Germanium, Phosphore d'Indium (InP) ou Chalcogénure ou sur des éléments optiques discrets comme des réseaux de diffraction ou des filtres interférentiels.

En variante, l'intégration du Modulateur Mach-Zehnder MZM peut être discrète ou hybride.

En variante, lémetteur optique 272 est à moduilation directe et utilise un laser modulé directement.

En variante, le modulateur Mach-Zehnder MZM qui est un mode de réalisation préféré peut être remplacé par un modulateur à électro-absorption EAM, et plus généralement par un modulateur de phase ou d'amplitude ou d'amplitude et de phase.

En variante, le multiplexeur en longueur d'onde 276 peut être omis.

De manière plus générale, la chaine d'émission descendante 254 et ses composants sont configurés pour fonctionner dans le domaine MWIR/LWIR de longueurs d'onde.

En outre, la deuxième chaîne de conversion descendante 54 comporte un deuxième module électronique 282 de traitement des données démodulées de la troisième liaison descendante, connecté entre la chaine de réception descendante et la chaine d'émission descendante.

Les applications industrielles de l'invention concernent en particulier toutes les transmissions optiques dans un milieu turbulent où un des terminaux se trouve dans le milieu turbulent.

Les applications de l'invention sont diverses et concernent d'abord les liaisons montantes de transmission à forte capacité. Les liaisons descendantes de transmission à capacités modérées pour l'observation depuis des satellites LEO/MEO sont également concernées.

## Revendications

1. Système spatial de transmission de données par voie optique en espace libre FSO, Free Space Optical, comprenant :
un premier terminal (4) de transmission de données par voie optique en espace libre FSO, terrestre ou aéronautique ;
un deuxième terminal (6) de transmission de données par voie optique en espace libre FSO, embarqué dans un satellite (8) ;
une plateforme relai (12), située entre le premier terminal de transmission (4) et le deuxième terminal de transmission (6), et configurée pour servir de relai régénérateur de transmission de données :
- entre une première liaison de transmission (22), montante depuis le premier terminal (4) jusqu'à la plateforme relai (12), et une deuxième liaison de transmission (24), montante de transmission de données, depuis la plateforme relai (12) jusqu'au deuxième terminal de transmission (6), et/ou
- entre une troisième liaison de transmission (32), descendante depuis le deuxième terminal (6) jusqu'à la plateforme relai (12), et une quatrième liaison de transmission (34), descendante depuis la plateforme relai (12) jusqu'au premier terminal (4) ;
le système spatial de transmission de données par voie optique en espace libre FSO étant **caractérisé en ce que**
la plateforme relai (12) est configuré pour évoluer à une altitude supérieure à celles nuages et des turbulences atmosphériques (42), et
la plateforme relai (12) est configurée pour :
- recevoir les données émises par le premier terminal (4), portées par un premier signal optique de la première liaison montante (22) qui utilise une première longueur d'onde dans le domaine MWIR/LWIR, Médium Wave Infrared/Long Wave Infrared, des longueurs d'onde infrarouges à ondes longues LWIR, comprises entre 8 et 12 µm et/ou des longueurs d'onde à ondes moyennes MWIR, comprises entre 3 et 5 µm, et émettre les données reçues sur un deuxième signal optique porteur de la deuxième liaison montante (24) qui utilise une deuxième longueur d'onde dans le domaine des longueurs d'ondes infrarouges à ondes courtes SWIR, Short Wave Infrared, ; et/ou
- recevoir les données émises par le deuxième terminal (6), portées par un troisième signal optique de la troisième liaison descendante (32) qui utilise une troisième longueur d'onde dans le domaine des longueurs d'onde infrarouges à ondes courtes SWIR, et émettre les données reçues sur un quatrième signal optique porteur de la quatrième liaison descendante (34) qui utilise une quatrième longueur d'onde dans le domaine MWIR/LWIR des longueurs d'onde infrarouges à ondes longues LWIR et/ou des longueurs d'ondes à ondes moyennes MWIR.

2. Système spatial de transmission de données par voie optique en espace libre FSO selon la revendication 1, dans lequel
l'altitude de la plateforme relai (12) est au niveau de la stratosphère ou au-delà ; et/ou
la plateforme relai (12) est un ballon dirigeable ou un drone évoluant dans la stratosphère ou un satellite évoluant sur une orbite basse LEO.

3. Système spatial de transmission de données par voie optique en espace libre FSO selon l'une des revendication 1 et 2, dans lequel le premier terminal (4), terrestre ou aéronautique, est compris dans l'ensemble formé par les stations sol, les navires, et les aéronefs tels que les drones, les avions et les hélicoptères.

4. Système spatial de transmission de données par voie optique en espace libre FSO selon l'une des revendication 1 à 3, dans lequel le deuxième terminal (6), spatial, est embarqué à bord d'un satellite (8) évoluant sur une orbite géostationnaire GEO ou une orbite à altitude moyenne MEO ou une orbite à basse altitude LEO.

5. Système spatial de transmission de données par voie optique en espace libre FSO selon l'une des revendications 1 à 4, dans lequel la plateforme relai (12) comprend une première chaîne de conversion montante (52) ayant
- une chaine de réception montante (202), configurée pour recevoir dans le domaine MWIR/LWIR le premier signal optique de la première liaison montante (22), optionnellement amplifier et/ou optionnellement dé-multiplexer en longueur d'onde le premier signal optique reçu, détecter et démoduler le signal amplifié et dé-multiplexé en données démodulées ;
- une chaine d'émission montante (204), configurée pour émettre, optionnellement amplifier, et/ou optionnellement multiplexer dans le domaine SWIR le deuxième signal optique de la deuxième liaison montante (24), modulé par les données démodulées de la première liaison montante (22), codées avec ou sans entrelacement ou non codées.

6. Système spatial de transmission de données par voie optique en espace libre FSO selon la revendication 5, dans lequel la chaine de réception montante (202) comporte :
un premier télescope (204) en réception de la première liaison montante (22),
une chaine démodulation montante (212) à détection cohérente par battement hétérodyne ou homodyne comprenant un oscillateur local et un hybride 90° suivi d'un ensemble d'au moins un photo-détecteur compris dans l'ensemble des photo-détecteurs à puits quantiques QWIPs, des photo-détecteurs à puits quantiques QCDs, et des photodétecteurs utilisant un matériaux compris dans l'ensemble des matériaux MCT, HgCdTe (Tellure de mercure-cadmium) et T2SL (InAs/Ga type-II superlattice).

7. Système spatial de transmission de données par voie optique en espace libre FSO selon la revendication 6, dans lequel la chaine de réception montante (202) comporte en outre
un préamplificateur optique semi-conducteur SOA à faible bruit (208), et/ou
un démultiplexeur en longueur d'onde (210) dans le domaine MWIR/LWIR, basé sur des technologies à semi-conducteurs Silicium, Germanium, Phosphure d'Indium (InP) ou Chalcogénure ou sur des éléments optiques discrets comme des réseaux de diffraction ou filtres interférentiels, placé avant ou après le préamplificateur, et/ou
dans lequel l'ensemble d'au moins un photo-détecteur est une paire de photo-détecteurs équilibrés.

8. Système spatial de transmission de données par voie optique en espace libre FSO selon l'une des revendications 5 à 7, dans lequel la chaine d'émission montante (204) comporte
un émetteur optique (222) dans le domaine de longueurs d'onde SWIR à modulation externe ou à modulation directe,
un amplificateur optique de puissance à fibre dopée en Erbium EDFA (224), et
optionnellement un multiplexeur en longueur d'onde (226), placé avant ou après l'amplificateur de puissance (224), et
un deuxième télescope (228) en émission de la deuxième liaison montante.

9. Système spatial de transmission de données par voie optique en espace libre FSO selon l'une des revendications 5 à 8, dans lequel la première chaîne de conversion montante (52) comporte un premier module électronique (232) de traitement des données démodulées de la première liaison montante connecté entre la chaine de réception montante (202) et la chaine d'émission montante (204), optionnellement pour décoder, corriger des erreurs sur bit et ré-encoder ces données.

10. Système spatial de transmission de données par voie optique en espace libre FSO selon l'une des revendications 1 à 9, dans lequel
la plateforme relai (12) comprend une deuxième chaîne de conversion descendante (54) ayant :
- une chaine de réception descendante (252), configurée pour recevoir dans le domaine SWIR le troisième signal optique de la troisième liaison descendante (32), optionnellement amplifier et/ou optionnellement dé-multiplexer en longueur d'onde le premier signal optique reçu, détecter et démoduler le signal amplifié et dé-multiplexé en données démodulées ;
- une chaine d'émission descendante (254), configurée pour émettre, amplifier et optionnellement multiplexer dans le domaine MWIR/LWIR le quatrième signal optique de la quatrième liaison descendante (34), modulé par les données démodulées de la troisième liaison descendante (32), codées avec ou sans entrelacement ou non codées.

11. Système spatial de transmission de données par voie optique en espace libre FSO selon la revendication 10, dans lequel la chaine de réception descendante (252) dans le domaine SWIR comporte
un troisième télescope (256) en réception de la troisième liaison descendante (32),
un préamplificateur optique à faible bruit (258), notamment un amplificateur à fibre dopée en Erbium EDFA,
optionnellement un démultiplexeur en longueur d'onde (260) dans le domaine SWIR, une chaîne de détection et de démodulation descendante (262) comprise dans l'ensemble formé par un photorécepteur à détection directe, un démodulateur optique et un photorécepteur mis en série, et un récepteur cohérent comprenant un oscillateur local et un hybride 90° suivi d'une paire de photorécepteurs équilibrés.

12. Système spatial de transmission de données par voie optique en espace libre FSO selon la revendication 10 ou la revendication 11, dans lequel la chaine d'émission descendante (254) comporte
un émetteur optique (272) dans le domaine de longueurs d'onde MWIR/LWIR à modulation directe ou externe,
un ou plusieurs amplificateurs optiques semi-conducteurs SOA de puissance (274),
optionnellement un multiplexeur en longueur d'onde (276), basé sur des technologies à semi-conducteurs Silicium, Germanium, Phosphure d'indium (InP) ou ou Chalcogénure ou sur des éléments optiques discrets comme des réseaux de diffraction ou des filtres interférentiels, et un quatrième télescope (278) en émission de la quatrième liaison descendante.

13. Système spatial de transmission de données par voie optique en espace libre FSO selon la revendication 12, dans lequel l'émetteur optique (272) de la chaine d'émission descendante (254) est à modulation externe, fonctionne dans le domaine des longueurs d'onde MWIR/LWIR et comporte un laser QCL à modulation externe, modulé par un modulateur de phase ou d'amplitude ou d'amplitude et de phase, compris dans l'ensemble formé par les modulateurs à électro-absorption EAM et les modulateurs Mach-Zehnder MZM.

14. Système spatial de transmission de données par voie optique en espace libre FSO selon la revendication 13, dans lequel l'émetteur optique (272) de la chaine d'émission descendante (254) comporte un laser QCL à modulation externe, modulé par un modulateurde phase ou d'amplitude ou d'amplitude et de phase compris dans l'ensemble formé par les modulateurs à électro-absorption EAM et les modulateurs Mach-Zehnder MZM, de préférence un modulateur MZM.

15. Système spatial de transmission de données par voie optique en espace libre FSO selon l'une des revendications 10 à 14, dans lequel
la deuxième chaîne de conversion descendante (54) comporte un deuxième module électronique (282) de traitement des données démodulées de la troisième liaison descendante (32), connecté entre la chaine de réception descendante (252) et la chaine d'émission descendante (254), optionnellement pour décoder, corriger des erreurs sur bit et ré-encoder ces données.

16. Système spatial de transmission de données par voie optique en espace libre FSO selon l'une des revendications 1 à 15, dans lequel
le premier terminal comprend un émetteur et un récepteur supplémentaires, configurés pour recevoir du ou émettre au deuxième terminal des données en voie optique directe par espace libre sans utiliser la plateforme relai, et
la plateforme relai (12) est configurée pour activer les première et deuxième liaisons montantes et/ou les troisième et quatrième liaisons descendantes lorsque la transmission de données par voie directe entre le premier terminal et le deuxième terminal est interrompu durablement par des sources de perturbations atmosphériques.

## Patentansprüche

1. Weltraumsystem zur optischen Datenübertragung im freien Raum FSO, Free Space Optical, Folgendes umfassend:
ein erstes Endgerät (4) zur optischen Datenübertragung im freien Raum FSO, terrestrisch oder luftgestützt;
ein zweites Endgerät (6) zur optischen Datenübertragung im freien Raum FSO, das an Bord eines Satelliten (8) mitgeführt wird;
eine Relaisplattform (12), die sich zwischen dem ersten Übertragungsendgerät (4) und dem zweiten Übertragungsendgerät (6) befindet und so konfiguriert ist, dass sie als Regenerationsrelais für die Datenübertragung fungiert:
- zwischen einer ersten Übertragungsverbindung (22), die als Uplink vom ersten Endgerät (4) zur Relaisplattform (12) führt, und einer zweiten Übertragungsverbindung (24), die als Uplink von der Relaisplattform (12) zum zweiten Übertragungsendgerät (6) führt, und/oder
- zwischen einer dritten Übertragungsverbindung (32), die als Downlink vom zweiten Endgerät (6) zur Relaisplattform (12) führt, und einer vierten Übertragungsverbindung (34), die als Downlink von der Relaisplattform (12) zum ersten Endgerät (4) führt;
wobei das Weltraumsystem zur optischen Datenübertragung im freien Raum FSO **dadurch gekennzeichnet ist, dass**
die Relaisplattform (12) so konfiguriert ist, dass sie sich in einer Höhe oberhalb der Wolken und der atmosphärischen Turbulenzen (42) bewegt, und
die Relaisplattform (12) zu Folgendem konfiguriert ist:
- Empfangen der vom ersten Endgerät (4) gesendeten Daten, die von einem ersten optischen Signal des ersten Uplinks (22) getragen werden, das eine erste Wellenlänge im Bereich MWIR/LWIR, Medium Wave Infrared/Long Wave Infrared, Langwellen-Infrarotwellenlängen LWIR, im Bereich von 8 bis 12 µm und/oder mittelwellige Wellenlängen MWIR, im Bereich von 3 bis 5 µm verwendet, und Senden der empfangenen Daten auf einem zweiten optischen Trägersignal des zweiten Uplinks (24), das eine zweite Wellenlänge im Bereich der kurzwelligen Infrarotwellenlängen SWIR, Short Wave Infrared verwendet; und/oder
- Empfangen der vom zweiten Endgerät (6) gesendeten Daten, die von einem dritten optischen Signal des dritten Downlinks (32) getragen werden, das eine dritte Wellenlänge im Bereich der kurzwelligen Infrarotwellenlängen SWIR verwendet, und Senden der empfangenen Daten auf einem vierten optischen Trägersignal des vierten Downlinks (34), das eine vierte Wellenlänge im MWIR/LWIR-Bereich der langwelligen Infrarotwellenlängen LWIR und/oder der mittelwelligen Wellenlängen MWIR verwendet.

2. Weltraumsystem zur optischen Datenübertragung im freien Raum FSO nach Anspruch 1, wobei
die Höhe der Relaisplattform (12) auf dem Niveau der Stratosphäre oder darüber liegt; und/oder
die Relaisplattform (12) ein lenkbarer Ballon oder eine Drohne ist, der/die sich in der Stratosphäre bewegt, oder ein Satellit, der sich in einer niedrigen Umlaufbahn, LEO, bewegt.

3. Weltraumsystem zur optischen Datenübertragung im freien Raum FSO nach einem der Ansprüche 1 oder 2, wobei das erste Endgerät (4), terrestrisch oder luftgestützt, in dem von Bodenstationen, Schiffen und Luftfahrzeugen wie Drohnen, Flugzeugen und Hubschraubern gebildeten Satz enthalten ist.

4. Weltraumsystem zur optischen Datenübertragung im freien Raum FSO nach einem der Ansprüche 1 bis 3, wobei das zweite, raumgestützte Endgerät (6) an Bord eines Satelliten (8) mitgeführt wird, der sich auf einer geostationären Umlaufbahn, GEO, oder einer Umlaufbahn in mittlerer Höhe, MEO, oder einer Umlaufbahn in niedriger Höhe, LEO, bewegt.

5. Weltraumsystem zur optischen Datenübertragung im freien Raum FSO nach einem der Ansprüche 1 bis 4, wobei die Relaisplattform (12) eine erste Uplink-Wandlungskette (52) umfasst, die Folgendes aufweist:
- eine Uplink-Empfangskette (202), die konfiguriert ist, um im MWIR/LWIR-Bereich das erste optische Signal von dem ersten Uplink (22) zu empfangen, optional das empfangene erste optische Signal zu verstärken und/oder optional in der Wellenlänge zu demultiplexen, das verstärkte und demultiplexte Signal zu erfassen und in demodulierte Daten zu demodulieren;
- eine Uplink-Sendekette (204), die konfiguriert ist, um das zweite optische Signal des zweiten Uplinks (24), das durch die demodulierten Daten des ersten Uplinks (22) moduliert ist, wobei die Daten mit oder ohne Verschachtelung codiert oder uncodiert sind, zu senden, optional zu verstärken und/oder optional im SWIR-Bereich zu multiplexen.

6. Weltraumsystem zur optischen Datenübertragung im freien Raum FSO nach Anspruch 5, wobei die Uplink-Empfangskette (202) Folgendes umfasst:
ein erstes Teleskop (204) zum Empfang des ersten Uplinks (22),
eine Uplink-Demodulationskette (212) mit kohärenter Heterodyn- oder Homodyn-Beat-Detektion, die einen Lokaloszillator und einen 90°-Hybriden umfasst, gefolgt von einem Satz von mindestens einem Photodetektor, der in dem Satz der Quantum-Well-Photodetektoren QWIPs enthalten ist, QCDs, und Photodetektoren, die ein Material verwenden, das in dem Satz von MCT-Materialien, HgCdTe (Quecksilber-Cadmium-Tellurid) und T2SL (InAs/Ga Typ-II Superlattice) enthalten ist.

7. Weltraumsystem zur optischen Datenübertragung im freien Raum FSO nach Anspruch 6, wobei die Uplink-Empfangskette (202) ferner Folgendes umfasst:
einen rauscharmen optischen SOA-Halbleitervorverstärker (208), und/oder
einen Wellenlängendemultiplexer (210) im MWIR/LWIR-Bereich, der auf Silizium-, Germanium-, Indiumphosphid- (InP) oder Chalkogenid-Halbleitertechnologien oder auf diskreten optischen Elementen wie Beugungsgittern oder Interferenzfiltern basiert und vor oder nach dem Vorverstärker angeordnet ist, und/oder
wobei der Satz von mindestens einem Photodetektor ein Paar von ausgeglichenen Photodetektoren ist.

8. Weltraumsystem zur optischen Datenübertragung im freien Raum FSO nach einem der Ansprüche 5 bis 7, wobei die Uplink-Sendekette (204) Folgendes umfasst:
einen optischen Sender (222) im SWIR-Wellenlängenbereich mit externer Modulation oder direkter Modulation,
einen optischen Leistungsverstärker mit Erbium-dotierter Faser EDFA (224), und
optional einen Wellenlängenmultiplexer (226), der vor oder nach dem Leistungsverstärker (224) angeordnet ist, und
ein zweites Teleskop (228), das von dem zweiten Uplink sendet.

9. Weltraumsystem zur optischen Datenübertragung im freien Raum FSO nach einem der Ansprüche 5 bis 8, wobei die erste Uplink-Wandlungskette (52) ein erstes elektronisches Modul (232) zur Verarbeitung der demodulierten Daten des ersten Uplinks aufweist, das zwischen der Uplink-Empfangskette (202) und der Uplink-Sendekette (204) angeschlossen ist, optional zum Decodieren, Korrigieren von Bitfehlern und erneuten Codieren dieser Daten.

10. Weltraumsystem zur optischen Datenübertragung im freien Raum FSO nach einem der Ansprüche 1 bis 9, wobei
die Relaisplattform (12) eine zweite Downlink-Wandlungskette (54) umfasst, die Folgendes aufweist:
- eine Downlink-Empfangskette (252), die konfiguriert ist, um im SWIR-Bereich das dritte optische Signal des dritten Downlinks (32) zu empfangen, optional das erste empfangene optische Signal zu verstärken und/oder optional in der Wellenlänge zu demultiplexen, das verstärkte und demultiplexte Signal zu erfassen und in demodulierte Daten zu demodulieren;
- eine Downlink-Sendekette (254), die konfiguriert ist, um das vierte optische Signal des vierten Downlinks (34), das durch die demodulierten Daten des dritten Downlinks (32) moduliert ist, wobei die Daten mit oder ohne Verschachtelung codiert oder uncodiert sind, zu senden, zu verstärken und optional im MWIR/LWIR-Bereich zu multiplexen.

11. Weltraumsystem zur optischen Datenübertragung im freien Raum FSO nach Anspruch 10, wobei die Downlink-Empfangskette (252) im SWIR-Bereich Folgendes aufweist:
ein drittes Teleskop (256) zum Empfang des dritten Downlinks (32),
einen rauscharmen optischen Vorverstärker (258), insbesondere einen Verstärker mit Erbium-dotierter Faser EDFA,
optional einen Wellenlängendemultiplexer (260) im SWIR-Bereich,
eine Downlink-Detektions- und Demodulationskette (262), die in dem aus einem direkt detektierenden Photorezeptor, einem optischen Demodulator und einem in Reihe geschalteten Photorezeptor gebildeten Satz enthalten ist, und einen kohärenten Empfänger, der einen Lokaloszillator und einen 90°-Hybriden, gefolgt von einem Paar ausgeglichener Photorezeptoren, umfasst.

12. Weltraumsystem zur optischen Datenübertragung im freien Raum FSO nach Anspruch 10 oder Anspruch 11, wobei die Downlink-Sendekette (254) Folgendes umfasst:
einen optischen Sender (272) im MWIR/LWIR-Wellenlängenbereich mit direkter oder externer Modulation,
einen oder mehrere optische SOA-Halbleiter-Leistungsverstärker (274),
optional einen Wellenlängenmultiplexer (276), der auf Silizium-, Germanium-, Indiumphosphid- (InP) oder Chalkogenid-Halbleitertechnologien oder auf diskreten optischen Elementen wie Beugungsgittern oder Interferenzfiltern basiert, und ein viertes Teleskop (278) zum Senden von dem vierten Downlink.

13. Weltraumsystem zur optischen Datenübertragung im freien Raum FSO nach Anspruch 12, wobei der optische Sender (272) der Downlink-Sendekette (254) mit externer Modulation arbeitet, im MWIR/LWIR-Wellenlängenbereich arbeitet und einen extern modulierten QCL-Laser aufweist, der durch einen Phasen- oder Amplituden- oder Amplituden- und Phasenmodulator moduliert wird, der in dem aus den Elektroabsorptionsmodulatoren EAM und den Mach-Zehnder-Modulatoren, MZM, gebildeten Satz enthalten ist.

14. Weltraumsystem zur optischen Datenübertragung im freien Raum FSO nach Anspruch 13, wobei der optische Sender (272) der Downlink-Sendekette (254) QCL-Laser mit externer Modulation umfasst, der durch einen Phasen- oder Amplituden- oder Amplituden- und Phasenmodulator moduliert wird, der in dem von den Elektroabsorptionsmodulatoren EAM und den Mach-Zehnder-Modulatoren MZM gebildeten Satz enthalten ist, vorzugsweise einen MZM-Modulator.

15. Weltraumsystem zur optischen Datenübertragung im freien Raum FSO nach einem der Ansprüche 10 bis 14, wobei
die zweite Downlink-Wandlungskette (54) ein zweites elektronisches Modul (282) zur Verarbeitung der demodulierten Daten des dritten Downlinks (32) aufweist, das zwischen der Downlink-Empfangskette (252) und der Downlink-Sendekette (254) angeschlossen ist, optional zum Decodieren, Korrigieren von Bitfehlern und erneuten Codieren dieser Daten.

16. Weltraumsystem zur optischen Datenübertragung im freien Raum FSO nach einem der Ansprüche 1 bis 15, wobei
das erste Endgerät einen zusätzlichen Sender und einen zusätzlichen Empfänger umfasst, die so konfiguriert sind, dass sie Daten auf direktem optischem Weg über den freien Raum von dem zweiten Endgerät empfangen oder an das zweite Endgerät senden, ohne die Relaisplattform zu verwenden, und
die Relaisplattform (12) so konfiguriert ist, dass sie den ersten und den zweiten Uplink und/oder den dritten und den vierten Downlink aktiviert, wenn die direkte Übertragung von Daten zwischen dem ersten Endgerät und dem zweiten Endgerät durch atmosphärische Störquellen dauerhaft unterbrochen ist.

## Claims

1. Free space optical, FSO, space data transmission system comprising:
a first ground or aeronautical free space optical FSO data transmission terminal (4);
a second free space optical FSO data transmission terminal (6) housed on board a satellite (8);
a relay platform (12), located between the first transmission terminal (4) and the second transmission terminal (6), and configured so as to serve as a regenerator relay for transmitting data:
- between a first uplink transmission link (22) from the first terminal (4) to the relay platform (12), and a second uplink data transmission link (24) from the relay platform (12) to the second transmission terminal (6), and/or
- between a third downlink transmission link (32) from the second terminal (6) to the relay platform (12), and a fourth downlink transmission link (34) from the relay platform (12) to the first terminal (4);
the free space optical FSO space data transmission system being **characterised in that**
the relay platform (12) is configured to move at an altitude higher than that of clouds and atmospheric turbulence (42), and
the relay platform (12) is configured so as to:
- receive the data transmitted by the first terminal (4), carried by a first optical signal of the first uplink (22) that uses a first wavelength in the MWIR/LWIR, Medium Wave Infrared/Long Wave Infrared, domain of long wave infrared LWIR wavelengths, between 8 and 12 µm and/or medium wave MWIR wavelengths, between 3 and 5 µm, and transmit the received data on a second optical signal carrying the second uplink (24) that uses a second wavelength in the domain of SWIR, Short Wave Infrared, wavelengths; and/or
- receive the data transmitted by the second terminal (6), carried by a third optical signal of the third downlink (32) that uses a third wavelength in the domain of short wave infrared SWIR wavelengths, and transmit the received data on a fourth optical signal carrying the fourth downlink (34) that uses a fourth wavelength in the MWIR/LWIR domain of long wave infrared LWIR wavelengths and/or medium wave MWIR wavelengths.

2. Free space optical FSO space data transmission system according to claim 1, wherein
the altitude of the relay platform (12) is in the stratosphere or beyond; and/or
the relay platform (12) is an airship or a drone moving in the stratosphere or a satellite moving over a low orbit LEO.

3. Free space optical FSO space data transmission system according to one of claims 1 and 2, wherein the first ground or aeronautical terminal (4) is comprised in the set formed by ground stations, ships, and aircrafts such as drones, planes and helicopters.

4. Free space optical FSO space data transmission system according to one of claims 1 to 3, wherein the second space terminal (6) is housed on board a satellite (8) moving over a geostationary orbit GEO or a medium-altitude orbit MEO or a low-altitude orbit LEO.

5. Free space optical FSO space data transmission system according to one of claims 1 to 4, wherein the relay platform (12) comprises a first uplink conversion chain (52) having
- an uplink reception chain (202), configured to receive, in the MWIR/LWIR domain, the first optical signal of the first uplink (22), optionally amplify and/or optionally wavelength-demultiplex the received first optical signal, detect and demodulate the amplified and demultiplexed signal into demodulated data;
- an uplink transmission chain (204), configured to transmit, optionally amplify, and/or optionally multiplex, in the SWIR domain, the second optical signal of the second uplink (24), modulated by the demodulated data of the first uplink (22), coded with or without interlacing or uncoded.

6. Free space optical FSO space data transmission system according to claim 5, wherein the uplink reception chain (202) contains:
a first telescope (204) at the reception end of the first uplink (22),
an uplink demodulation chain (212) with coherent detection through a heterodyne or homodyne beat comprising a local oscillator and a 90° hybrid followed by an assembly of at least one photodetector comprised in the set of QWIP quantum-well photodetectors, QCD quantum-well photodetectors, and photodetectors using a material from the set of MCT, HgCdTe (mercury cadmium telluride) and T2SL (InAs/Ga type-II superlattice) materials.

7. Free space optical FSO space data transmission system according to claim 6, wherein the uplink reception chain (202) further contains
a low-noise semiconductor optical preamplifier SOA (208), and/or
a wavelength demultiplexer (210) in the MWIR/LWIR domain, based on silicon, germanium, indium phosphide (InP) or chalcogenide semiconductor technologies or on discrete optical elements such as diffraction gratings or interference filters, placed before or after the preamplifier, and/or
wherein the set of at least one photodetector is a pair of balanced photodetectors.

8. Free space optical FSO space data transmission system according to one of claims 5 to 7, wherein the uplink transmission chain (204) contains
an optical transmitter (222) in the SWIR wavelength domain with external modulation or direct modulation,
an erbium-doped fibre power optical amplifier EDFA (224), and
optionally a wavelength multiplexer (226), placed before or after the power amplifier (224), and
a second telescope (228) at the transmission end of the second uplink.

9. Free space optical FSO space data transmission system according to one of claims 5 to 8, wherein the first uplink conversion chain (52) contains a first electronic module (232) for processing the demodulated data of the first uplink, connected between the uplink reception chain (202) and the uplink transmission chain (204), optionally for decoding, correcting bit errors and re-encoding these data.

10. Free space optical FSO space data transmission system according to one of claims 1 to 9, wherein
the relay platform (12) comprises a second downlink conversion chain (54) having:
- a downlink reception chain (252), configured so as to receive, in the SWIR domain, the third optical signal on the third downlink (32), optionally amplify and/or optionally wavelength-demultiplex the received first optical signal, detect and demodulate the amplified and demultiplexed signal into demodulated data;
- a downlink transmission chain (254), configured so as to transmit, amplify and optionally multiplex, in the MWIR/LWIR domain, the fourth optical signal on the fourth downlink (34), modulated by the demodulated data of the third downlink (32), coded with or without interlacing or uncoded.

11. Free space optical FSO space data transmission system according to claim 10, wherein the downlink reception chain (252) in the SWIR domain contains
a third telescope (256) at the reception end of the third downlink (32),
a low-noise optical preamplifier (258), notably an erbium-doped fibre amplifier EDFA,
optionally a wavelength demultiplexer (260) in the SWIR domain,
a downlink detection and demodulation chain (262) comprised in the set formed by a direct detection photoreceiver, an optical demodulator and a photoreceiver placed in series, and a coherent receiver comprising a local oscillator and a 90° hybrid followed by a pair of balanced photoreceivers.

12. Free space optical FSO space data transmission system according to claim 10 or claim 11, wherein the downlink transmission chain (254) contains
an optical transmitter (272) in the MWIR/LWIR wavelength domain with direct or external modulation,
one or more power semiconductor optical amplifiers SOA (274),
optionally a wavelength multiplexer (276), based on silicon, germanium, indium phosphide (InP) or chalcogenide semiconductor technologies or on discrete optical elements such as diffraction gratings or interference filters, and a fourth telescope (278) at the transmission end of the fourth downlink.

13. Free space optical FSO space data transmission system according to claim 12, wherein the optical transmitter (272) of the downlink transmission chain (254) has external modulation, operates in the MWIR/LWIR wavelength domain and contains a QCL laser with external modulation, modulated by a phase or amplitude or amplitude and phase modulator, comprised in the set formed by the electro-absorption modulators EAM and the Mach-Zehnder modulators MZM.

14. Free space optical FSO space data transmission system according to claim 13, wherein the optical transmitter (272) of the downlink transmission chain (254) contains a QCL laser with external modulation, modulated by a phase or amplitude or amplitude and phase modulator, comprised in the set formed by the electro-absorption modulators EAM and the Mach-Zehnder modulators MZM, preferably an MZM modulator.

15. Free space optical FSO space data transmission system according to one of claims 10 to 14, wherein
the second downlink conversion chain (54) contains a second electronic module (282) for processing the demodulated data on the third downlink (32), connected between the downlink reception chain (252) and the downlink transmission chain (254), optionally for decoding, correcting bit errors and re-encoding these data.

16. Free space optical FSO space data transmission system according to one of claims 1 to 15, wherein
the first terminal comprises an additional transmitter and receiver, configured to receive from or transmit to the second terminal data in a direct free space optical manner without using the relay platform, and
the relay platform (12) is configured to activate the first and second uplinks and/or the third and fourth downlinks when the direct data transmission between the first terminal and the second terminal is durably interrupted by sources of atmospheric interference.
